(19) Europäisches Patentamt
European Patent Office
Office européen des brevets

(11) EP 4 648 271 A1

(12) EUROPEAN PATENT APPLICATION

(43) Date of publication:
12.11.2025 Bulletin 2025/46

(21) Application number: 25175486.7

(22) Date of filing: 09.05.2025

(51) International Patent Classification (IPC):
H02P 6/16 (2016.01)        G01P 3/487 (2006.01)
H02K 11/21 (2016.01)

(52) Cooperative Patent Classification (CPC):
H02P 6/16; G01P 3/487

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 10.05.2024 US 202418660830

(71) Applicant: Rockwell Automation Technologies,
Inc.
Mayfield Heights, OH 44124 (US)

(72) Inventors:
• Hoffman, Jonathan D.
53092 Mequon, WI (US)
• Guru, Arun K.
53092 Mequon, WI (US)
• Shea, Adam M.
53092 Mequon, WI (US)

(74) Representative: Grünecker Patent- und
Rechtsanwälte
PartG mbB
Leopoldstraße 4
80802 München (DE)

(54) **SYSTEM AND METHOD FOR SYNCHRONIZING INPUT DATA AT AN ENCODER**

(57)     A system for correlating an input signal with an operating state of a motor includes a substrate which is either integral to an encoder or mounted on the motor. The substrate has a first input connected to a sensor proximate to the motor to receive a first signal from the sensor. The substrate also includes a second input to receive a position feedback signal from the encoder. A control circuit is operative to detect a change in state of the first signal and to correlate at least one additional signal to the change in state of the first signal. A data packet including the first signal and the at least one additional signal correlated at the change in state is generated. A communication interface is operative to transmit the data packet from the control circuit to at least one additional controller external from the motor.

FIG. 4

EP 4 648 271 A1

## EP 4 648 271 A1

**Description**

BACKGROUND INFORMATION

The subject matter disclosed herein relates to a system and method for synchronizing input signals with time or position at a motor. More specifically, a present time or position is sampled in tandem with an input signal being received at a motor to identify when the input signal was received.

As is known to those skilled in the art, motor drives are commonly used to control operation of a motor. The motor drive receives a command signal, corresponding to a desired operation of the motor. The command signal may be a commanded position, velocity, torque, or the like. The motor drive regulates an output voltage and/or output current at a frequency and amplitude to achieve the commanded position, velocity, or torque.

In some applications, the motor drive executes in an open-loop operating mode. With open-loop operation, the motor drive generates an output voltage to achieve desired operation with no feedback signal used to adapt the generated voltage. The voltage is supplied to the motor, and the motor is expected to achieve desired operation as a function of the generated voltage. In other applications, the motor drive executes in a closed-loop operating mode. With closed-loop operation, the motor drive receives a feedback signal corresponding to the command signal by which the motor drive adapts the generated voltage to more accurately achieve the commanded signal.

One common feedback signal provided to a motor drive is the angular position of the motor. An encoder is mounted on the motor where the encoder generates a position feedback signal corresponding to the angular position of the motor. The motor drive periodically samples this position feedback signal to obtain a value of the angular position of the motor and uses this value in a control routine to generate the output voltage from the motor rive.

As is also known to those skilled in the art, this angular position value is sampled at a finite interval. After sampling the value, the motor drive must execute the control routine to determine a desired output voltage and then generate switching signals for the power electronic devices within the motor drive to selectively connect a DC bus voltage to the output of the motor drive. The switching signals are generated such that the desired output voltage is provided at the output of the motor drive. The rate at which the angular position is sampled is typically performed at the rate at which the motor drive generates the switching signals.

In some applications which utilize motor drives, it is desirable to correlate a second feedback signal within the controlled system to a current position of the motor. In a process line, for example, with a repeated motion, such as stamping, cutting, and the like, an industrial controller of the controlled system may monitor a position at which the repeated motion occurs. Historically, it was known to provide the second feedback signal as an input to the motor drive. When the motor drive receives the second feedback signal, it is able to read the present angular position of the motor from the position feedback signal and associate this angular position with the second feedback signal. However, the resolution of this angular position is limited to the finite interval at which the angular position is sampled. As speeds in the process line increase, the difference in angular positions of the motor between samples increases as well. Thus, the resolution at which the position may be determined is decreased.

Thus, it would be desirable to provide an improved method and system for synchronizing input data with position information in a controlled system.

BRIEF DESCRIPTION

According to one embodiment of the invention, a system for correlating an input signal with an operating state of a motor includes a substrate mounted on the motor. The substrate further includes a first input, a second input, a control circuit, and a communication interface. The first input is connected to a sensor proximate to the motor to receive a first signal from the sensor. The second input is connected to a position sensor mounted on the motor to receive a position feedback signal from the position sensor. The control circuit is operative to detect a change in state of the first signal, correlate at least one additional signal to the change in state of the first signal, and generate a data packet including the first signal and the at least one additional signal correlated at the change in state. The communication interface is operative to transmit the data packet from the control circuit to at least one additional controller external from the motor.

According to another embodiment of the invention, a method for correlating an input signal with an operating state of a motor receives a first signal at a first input from a sensor proximate to the motor, where the first input is on a substrate mounted on the motor. A position feedback signal is received at a second input on the substrate from a position sensor mounted on the motor. A change in state of the first signal is detected, and at least one additional signal is correlated to the change in state of the first signal. A data packet, including the first signal and the at least one additional signal correlated at the change in state, is generated and transmitted from a control circuit on the substrate to at least one additional controller external from the motor.

According to still another embodiment of the invention, a system for correlating an input signal at a motor includes an encoder mounted on the motor operative to generate a position feedback signal corresponding to an angular position of the motor. A substrate is mounted in either the encoder or on the motor, and an input on the substrate is operative to receive an external signal from a sensor proximate the motor. A control circuit on the substrate is operative to detect a change in state of the external signal, generate a data packet including an indication of the change of state of the external signal and at least one additional signal correlated at the change in state, and a communication interface operative to transmit the data packet from the control circuit to at least one additional controller external from the motor.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

BRIEF DESCRIPTION OF THE DRAWINGS

Various exemplary embodiments of the subject matter disclosed herein are illustrated in the accompanying drawings in which like reference numerals represent like parts throughout, and in which:

FIG. 1 is an exemplary control system in which input data at an encoder is synchronized;
FIG. 2 is a block diagram representation of a portion of the control system of Fig. 1; and
FIG. 3 is a front elevation view of a substrate illustrating one embodiment of a control circuit for synchronizing input data at an encoder;
FIG. 4 is a timing diagram corresponding to sampling data at two data rates;
FIG. 5 is a timing diagram illustrating correlation of an input signal with a prior sampled data value; and
FIG. 6 is a timing diagram illustrating generation of an interrupt signal based on an input signal in order to sample data.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

DETAILED DESCRIPTION

The various features and advantageous details of the subject matter disclosed herein are explained more fully with reference to the non-limiting embodiments described in detail in the following description.

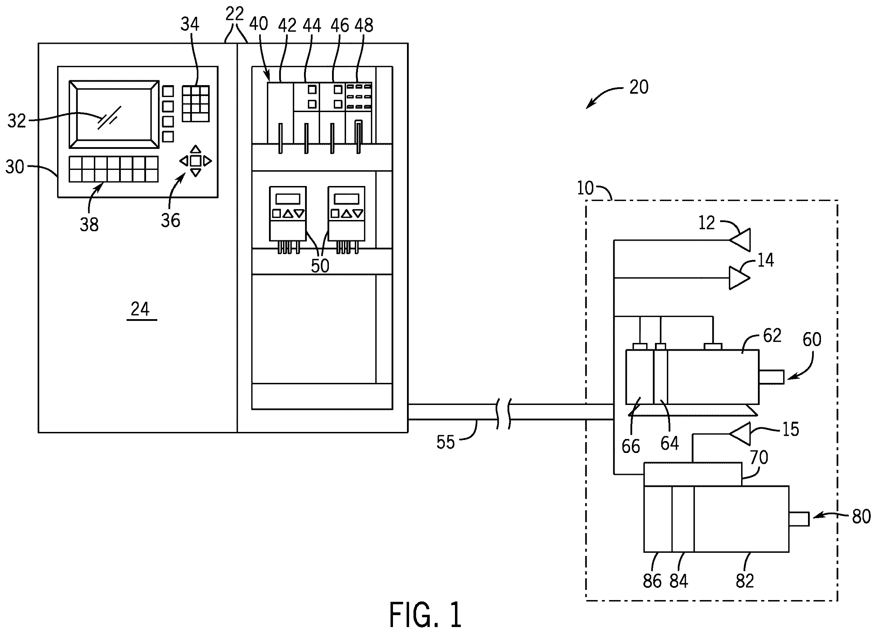

The subject matter disclosed herein describes an improved method and system for synchronizing input data with position information in a controlled system. Referring initially to Fig. 1, an industrial control system 20 may include control cabinets 22 housing control devices. The control cabinets 22 may be located in a dedicated control room or out in a manufacturing environment proximate a machine or process 10 to be controlled by the control system 20. The illustrated embodiment includes a first control cabinet with a closed door 24 on which a human machine interface (HMI) 30 is mounted, and a second control cabinet with a door removed for illustration purposes. The control cabinets 22 include doors to provide an enclosure in which the control devices are protected from the ambient environment in which the control cabinet is located.

The HMI 30 is typically an industrial computer hardened for use in a manufacturing environment. The HMI 30 is in communication with an industrial controller 40 to provide information to a technician regarding the controlled machine or process 10. A display 32 allows data to be shown to the technician and may be a touch screen to additionally receive input from the technician. Additional user interface devices are provided on the HMI such as a numerical keypad 34, a directional keypad 36 for menu navigation, and preprogrammed function keys 38, providing rapid access to various screens, menus, or data as required by the application requirements.

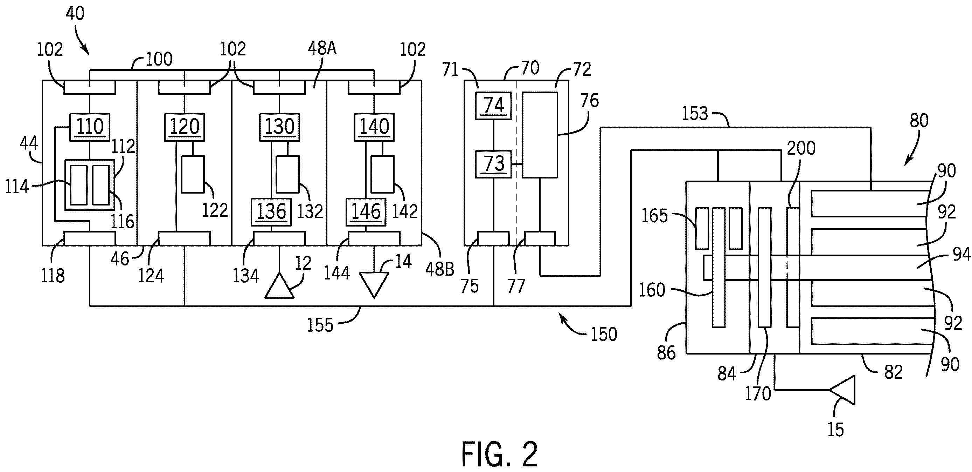

An industrial controller 40 is mounted within the second control cabinet 22. The industrial controller 40 is configurable and includes multiple modules with a backplane 100 (see also Fig. 2) extending between and providing communication between the modules. The modules may be installed within a housing or on a mounting bracket, such as a DIN rail. The illustrated industrial controller 40 includes a power supply module 42, a processor module 44, a network module 46, and one I/O module 48. The network module 46, processor module 44, or a combination thereof may communicate on an industrial control network 150 (see also Fig. 2), such as ControlNet®, DeviceNet®, or EtherNet/IP®, between the industrial controller 40 and other devices connected to the industrial controller. The industrial network 150 includes network media 155, which may be wired, wireless, or a combination thereof, connecting devices for communication on the industrial network. The industrial controller 40 may be, for example, a programmable logic controller (PLC), a programmable automation controller (PAC), or the like. It is contemplated that the industrial controller 40 may include still other modules, such as an axis control module, various numbers and arrangements of each of the illustrated modules, or additional racks connected via the industrial control network 150. Optionally, the industrial controller 40 may have a fixed configuration, for example, with a predefined number of network and I/O connections. The I/O module 48 receives input signals from sensors 12 or other devices present on the controlled machine or process 10 and transmits output signals to actuators 14 or other devices also present on the controlled machine or process.

Also shown in the second control cabinet 22 are two cabinet mounted motor drives 50. The cabinet mounted motor drives 50 are in communication with the industrial controller 40 to receive motion commands for motors 60 connected to the motor drives 50. Wiring 55 must also be run from the cabinet mounted motor drives 50 to the motors 60. For ease of illustration, a single block represents all of the wiring 55 extending between the control cabinets 22 and the controlled machine or process 10. It is understood that the wiring 55 would run to multiple locations and for multiple distances ranging from tens to hundreds of feet. Wires may be run individually, in bundles, as a cable, in cable trays, conduits, or in any other suitable manner according to the application requirements. A cabinet mounted motor drive 50 typically includes power wires and control wires extending between the motor drive 50 and the motor 60. The power wires supply the desired voltage and current to cause rotation of the motor 60 and the control wires may be input signals, such as encoder feedback, or output signals, such as brake control commands. The illustrated motor 60 includes a motor chassis 62 containing the stator and rotor of the motor as well as an encoder 64 and a brake unit 66 mounted to the motor chassis 62.

In some applications, a motor drive may be mounted directly on a motor. As further illustrated in Fig. 1, an integrated motor drive 70 is fixed to a motor 80. Power is still provided to the integrated motor drive 70. However, other wiring, such as the control wiring and power wires supplying the desired voltage and current to cause rotation of the motor 80 are significantly reduced between the motor drive 70 and the motor 80. Mounting the motor drive 70 on the motor 80 reduces the potential for noise from other devices interfering with the signals between the motor 80 and the motor drive 70. Mounting the motor drive 70 on the motor 80 also reduces the radiated emissions generated by the wiring between the motor drive and the motor that may create a potential for interference with other devices. The illustrated motor 80 includes a motor chassis 82 containing the stator 90 and rotor 92 (see also Fig. 2) of the motor as well as an encoder 84 and a brake unit 86 mounted to the motor chassis 82. As further illustrated, one or more sensors 15 may be mounted proximate to the motor 80 and may provide input signals to the motor 80.

Turning next to Fig. 2, a portion of the control system 20 is illustrated in more detail. The processor module 44 includes a processor 110 communicating with a memory device 112 to execute an operating system program 114, generally controlling the operation of the processor module 44, and a control program 116, describing a desired control of the industrial machine or process 10, where each control program 116 is typically unique to a given application of the industrial control system 20. The memory 112 may also include data tables, for example, I/O tables and service routines (not shown in Fig. 2) as used by the control program 116. The processor module 44 communicates via a bus, illustrated as a backplane 100 extending between backplane connectors 102, with the network module 46 or any of the other modules 48 in the industrial controller 40.

The network module 46 includes a control circuit 120, which may include a microprocessor and a program stored in memory 122 and/or dedicated control circuitry such as an application specific integrated circuit (ASIC) or field programmable gate array (FPGA). The control circuit 120 is in communication with the other modules in the industrial controller via the backplane connector 102 and the backplane 100. The control circuit 120 may communicate with a network interface circuit 124 within the network module 46, where the network interface circuit 124 provides for execution of low-level electrical protocols on the industrial control network 150.

A first I/O module 48A is illustrated as an input module, configured to receive input signals from sensors 12 or other devices in the controlled machine or process 10. The first I/O module 48A includes a control circuit 130, which may include a microprocessor and a program stored in memory 132 and/or dedicated control circuitry such as an application specific integrated circuit (ASIC) or field programmable gate array (FPGA). The control circuit 130 is in communication with the other modules in the industrial controller via the backplane connector 102 and the backplane 100. The control circuit 130 is also in communication with a logic interface circuit 136, where the logic interface circuit converts input signals received from the sensors 12 via terminals 134 on the input module 48A into digital signals for use by the control circuit 130.

A second I/O module 48B is illustrated as an output module, configured to transmit output signals to actuators 14 or other devices in the controlled machine or process 10. The second I/O module 48B includes a control circuit 140, which may include a microprocessor and a program stored in memory 142 and/or dedicated control circuitry such as an application specific integrated circuit (ASIC) or field programmable gate array (FPGA). The control circuit 140 is in communication with the other modules in the industrial controller via the backplane connector 102 and the backplane 100. The control circuit 140 is also in communication with a logic interface circuit 146, where the logic interface circuit converts digital signals from the control circuit 140 to output signals for transmission to the actuators 14 via terminals 144 on the output module 48B.

Each motor drive 70 includes a control section 71 and a power section 72. The power section 72 includes components typically handling, for example, 200-575 VAC or 200-800VDC. The power section 72 receives power in one form and utilizes power switching devices 76 to regulate power output to the motor 80 in a controlled manner to achieve desired operation of the motor. Cabling 153 connects power output terminals 77 of the motor drive 70 to supply the generated output voltage to the motor 80. The control section 71 includes components typically handling, for example 110 VAC or 3.3-50VDC. The control section 71 includes processing devices, feedback circuits, and supporting logic circuits to receive feedback signals and generate control signals within the motor drive 70. The illustrated embodiment includes a processor 73 in communication with memory 74. The processor receives data from the industrial network 150 via a communication interface 75. The data includes, for example, commands from the industrial controller 40 corresponding to desired operation of the motor. The processor 73 executes one or modules to control operation of the switching devices 76 to generate a desired output voltage to achieve desired operation of the motor 80.

Fig. 2 further illustrates a portion of the elements included in a brake module 86 and an encoder 84 mounted to the motor chassis 82. A motor shaft 94 extends through the center of the motor 80. One end of the motor shaft 94 extends from the front of the motor 80 and is coupled to a gearbox, pulley, or other drive member to achieve desired operation of one axis of the controlled machine or process 10. The other end of the motor shaft 94 extends from the rear of the motor chassis 82 for coupling to the encoder 84 and brake 86. The brake 86 may be a disc brake, where a disc 160 is mounted to the motor shaft 94 and calipers 165 are controlled to selectively engage the disc to set and release the brake 86. The encoder may include a graduated disc 170 mounted to the motor shaft 94, where sensors read the gradations present on the disc 170 to detect an angular position of the motor 80. According to the illustrated embodiment, the encoder 84 also includes a printed circuit board (PCB) substrate 200 within the encoder.

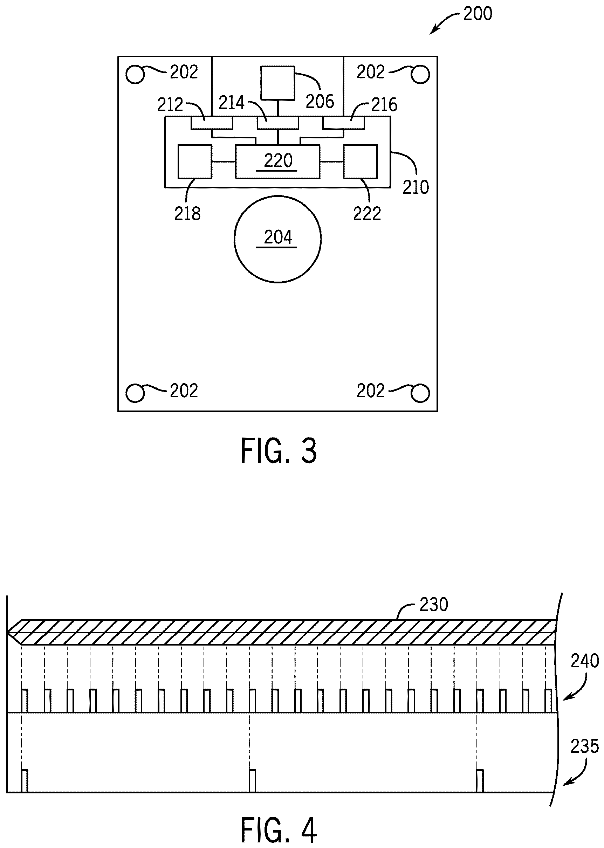

Turning next to Fig. 3, one embodiment of the substrate 200 mounted within the encoder 84 is illustrated. The substrate 200 includes mounting holes 202 through which fasteners secure the substrate 200 within the encoder 84. An opening 204 allows the motor shaft 94 to pass therethrough. A sensor 206 is mounted on the substrate 200 to detect signals from the graduated disc 170. The sensor 206 may be, for example, a hall effect sensor, or other magnetic field sensor, to detect magnetic fields present on the graduated disc 170, an optical sensor to detect light passing through openings in the graduated disc 170, or still any other suitable sensor to detect gradations on the disc 170 corresponding to the angular position of the motor 80. A control circuit 210 receives feedback signals from the sensor 206. An interface 214 in the control circuit 210 converts the feedback signals to digital values for a processor 220 present in the control circuit 210. The control circuit 210 also includes an input interface 212 to receive input signals from one or more devices 15 mounted proximate the motor 80. The input interface 212 converts the input signals to digital values for the processor 220. The processor 220 is in communication with memory 218 present in the control circuit 210. The memory 218 may be used to store data and/or instructions executed by the processor 220. The control circuit 210 also includes a clock circuit 222, where the clock circuit 222 may include a free running clock used to determine a time at which events occur. The control circuit 210 further includes an output interface 216. The output interface 216 allows the processor 220 to communicate with external devices. According to one aspect of the invention, the output interface 216 is a network interface, connecting the control circuit 210 to the industrial network 150. According to another aspect of the invention, the output interface 216 may be a wireless communication interface allowing the control circuit to communicate, for example, to an integrated motor drive 70 mounted proximate the substrate 200.

According to another aspect of the invention, the substrate 200 may be mounted on the motor 80 but external from the encoder 84. The motor 80 may include an end bell (not shown) in which the substrate 200 is mounted. Rather than having a sensor 206 to generate a feedback signal corresponding to the angular position of the motor, the substrate 200 includes another input interface to receive the feedback signal from an external encoder also mounted on the motor 80. The control circuit 210 is then configured to read the feedback signal from the encoder 84 and provide values of the feedback signal to the processor 220.

In operation, the control circuit 210 synchronizes input signals from devices 15 mounted external to the motor 80 with either a time or a position signal present at the motor 80. According to one aspect of the invention, the input signal is synchronized with the angular position of the motor 80. The control circuit 210 on the substrate 200 is configured to sample the angular position at a greater rate than the frequency at which a motor drive 70 controlling operation of the motor 80 is able to sample the angular position. A motor drive 70 may sample the position feedback signal from an encoder 84 once per periodic interval of the control routine executing in the motor drive 70, where the periodic interval ranges from about fifty microseconds to one hundred twenty-five microseconds (50 - 125 $\mu$s). The periodic interval for the motor drive 70 typically corresponds to a rate at which the motor drive 70 is able to regulate the output voltage to the motor 80. Because the control circuit 210 is either included on a substrate 200 within the encoder 84 and in communication with the sensor 206 generating the position feedback signal or the control circuit 210 is on a substrate 200 mounted on the motor 80 proximate the encoder where the control circuit 210 can independently sample the position feedback signal, the control circuit 210 samples the position feedback signal at a greater frequency than the motor drive 70 controlling the motor 80. With reference to Fig. 4, the position feedback signal 230 may be continually changing as a function of the angular position of the motor 80. The motor drive 70 samples the position feedback signal 230 at a first periodic interval 235 and the control circuit 210 samples the position feedback signal 230 at a second periodic interval 240. According to the illustrated embodiment, the second periodic interval 240 is ten times faster than the first periodic interval 235. The control circuit 210 may sample the position feedback signal 230 in a range from about thirty to about fifty times greater than the motor drive 70 samples the position feedback signal. It is another aspect of the invention, that the control circuit 210 samples the position feedback signal 230 at about three microsecond intervals (3 $\mu$s).

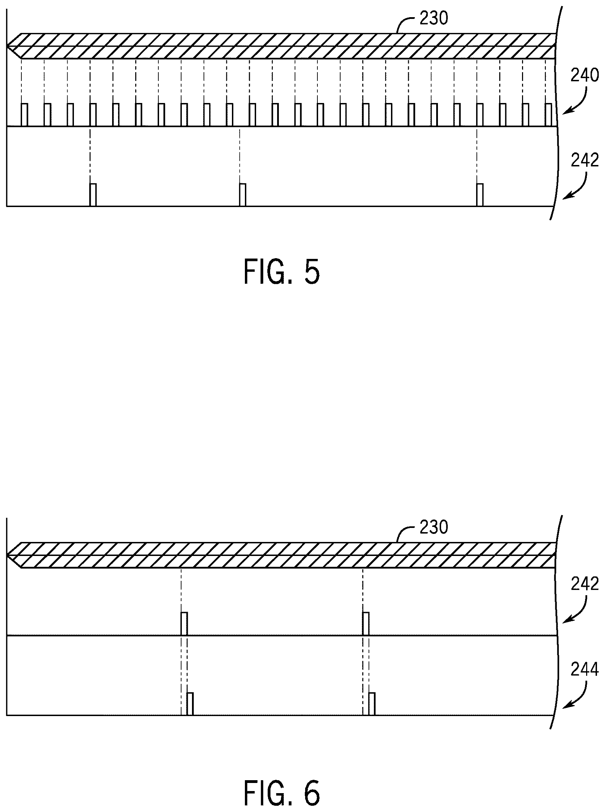

With the control circuit 210 sampling the position feedback signal 230 at the increased sampling rate, these sampled values may be used to provide an improved correlation of a change in state of an input signal with a position at which the input signal changes state. With reference to Fig. 5, the position feedback signal 230 is sampled at the second periodic interval 240. These sampled values are stored in memory 218 of the control circuit 210. According to one aspect of the invention, the most recent value for the position feedback signal 230 continually overwrites the prior sampled value. Optionally, a predefined number of values of the position feedback signal 230 may be stored in a circular buffer, where the oldest value is overwritten once the buffer is full. An external device 15 generates an input signal 242 at a periodic interval corresponding to an operating state of the controlled machine or process 10. One such operating state may be a high-speed registration signal. In a controlled process 10 with a web, the web may include symbols, colors, a combination thereof, or other such indicia at a periodic interval on the web. The indicia are detected and provide a feedback signal that allows the industrial controller 40 to adapt operation of the controlled process. The industrial controller 40, for example, may adjust the speed at which the web is flowing, control a rotary knife to cut the web at desired lengths, or control a stamp or other label application to periodically affix a mark or label to the web.

The detection of each indica and generation of a registration signal indicates one complete machine cycle. As illustrated in Fig. 5, the occurrence of each input signal 242 does not coincide with sampling of the position feedback signal 230. Further, the delay between a prior instance of sampling the position feedback signal 230 and the occurrence of an input signal 242 may vary. However, because, the sampling of the position feedback signal 230 occurs at the control circuit 210 and because the input signal 242 is brought back to the control circuit, the interval between samples is reduced and, similarly, the potential variation in delay between sampling and detecting the input signal is reduced. The control circuit 210 identifies each instance of the input signal 242 and stores a value of the position feedback signal 230 from the sample instance immediately prior to detecting the input signal. In some applications, the input signal 242 may be, for example, an analog signal, having multiple different values. Alternately, the input signal may indicate one of two different operating states in the controlled machine or process 10. Rather than correlating a position with the detection of the input signal, the control circuit 210 may detect a change in state of the input signal or a change in value of the analog signal (beyond a minimum threshold) and correlate the prior stored value of the position feedback signal with the change in state or the change in value. Each of the detected input signals 242 and the correlated position information are stored in memory 218 of the control circuit 210.

Turning next to Fig. 6, an alternate method of correlating the position information to the input signal is illustrated. The input signal 242 is generated and/or changes state in a manner similar to that discussed above. However, rather than sampling the position feedback signal 230 at a periodic interval, the control circuit 210 includes an interrupt signal 244. The interrupt signal 244 is generated based on a desired change in state of the input signal 242. For example, the interrupt signal 244 may be generated when the input signal 242 transitions from a logical zero to a logical one state or, conversely, is generated when the input signal 242 transitions from the logical one state to the logical zero state. Alternately, the interrupt signal 244 may be generated when the interrupt signal 244 exceeds a predefined threshold. Regardless of how the interrupt signal 244 is generated, the position feedback signal 230 is sampled when the interrupt signal 244 is generated. As illustrated in Fig. 6, the duration after detecting the input signal 242 and generating the interrupt signal 244 is very small. Further, the duration between a change in state of the input signal 242 and sampling the position feedback signal 230 is more consistent than obtaining a value of the position feedback signal 230 via the periodic sampling illustrated in Fig. 5. As a result, the position feedback signal 230 is read at a generally consistent interval after the change in state of the input signal 242 is detected. The value of the position feedback signal 230 which is sampled when the change in state of the input signal 242 is detected is stored in memory 218 of the control circuit 210 along with the input signal.

In some applications, it may be desirable to correlate detecting a change in state of the input signal with a time rather than a position. The clock circuit 222 in the control circuit 210 includes a free running timer that generates an output signal corresponding to a local time in the control circuit 210. This local time may be used in a manner similar to that discussed above with respect to the position feedback signal 230. In a manner similar to that illustrated in Fig. 5, the local time may be sampled at a periodic interval and stored in memory 218 of the control circuit 210. When a change in state of the input signal 242 is detected, the prior stored timestamp may be associated with the change in state of the input signal. In a manner similar to that illustrated in Fig. 6, the control circuit 210 may generate an interrupt signal 244 when the change in state in the input signal 242 is detected. Rather than reading the position feedback signal 230, a timestamp, corresponding to the present value of the local time in the clock circuit 222, may be stored in memory 218. Thus, the control circuit 210 may be configured to correlate a position, a time, or a combination of position and time with the detection of an input signal 242.

In order for another controller to utilize the correlated timestamp from the control circuit 210, it is necessary to first correlate the clock circuit 222 with a known time. Correlating the clock circuit 222 with a known time may be performed by synchronizing the clock circuit 222 of the control circuit 210 to a clock circuit of another controller. In some applications, multiple clock circuits are synchronized to a master time. A clock circuit for one of the controllers, such as the industrial controller 40, may be identified as the primary clock. Alternately, an external computing device may provide a primary clock for multiple industrial controllers spread around the controlled machine or process 10. According to still another option, it may only be necessary to synchronize the clock circuit 222 of the control circuit 210 to one other controller with which it is transmitting the input signal 242 and the correlated time.

An exemplary method for synchronizing time between two controllers includes exchanging a series of message between the controllers. A first synchronize request message may be transmitted between the controller with the master time and the control circuit 210 via the industrial network 150. The first synchronize request message is transmitted at a first time, $T_1$. The transmitting controller captures a timestamp of time, $T_1$, using its clock circuit and transmits a second message with the timestamp, $T_1$, included in the data packet of the second message. The control circuit 210 receives the first synchronize request message at a second time, $T_2$, and generates a second timestamp corresponding to the time the first synchronize request message is received. The control circuit 210 also receives the second message such that it has both timestamps generated at the first and second times. As may be appreciated, the first timestamp, $T_1$, is captured as a function of the local time in the primary controller, and the second timestamp, $T_2$, is captured as a function of the local time in the control circuit 210, which has not yet been synchronized to the master time. As a result, there will be an offset between the local times in the two controllers.

A second synchronize request message is then generated in the control circuit 210 and transmitted back to the primary controller. The control circuit 210 captures a third timestamp, $T_3$, using the local time in the clock circuit 222, where the third timestamp corresponds to the time that the second synchronize request message was transmitted. The third timestamp, $T_3$, is stored with the first and second timestamps. The second synchronize request message is received at the primary controller at a fourth time, $T_4$, and the primary controller obtains a timestamp of the fourth time. The primary controller sends a response message back to the control circuit 210 which includes the fourth timestamp, $T_4$. The control circuit 210 receives the response message and now has all four timestamps.

The control circuit 210 may then use the four timestamps to determine a time offset for the clock circuit 210 from the master time. The third timestamp, $T_3$, is captured as a function of the local time in the control circuit 210, which has not yet been synchronized to the master time, and the fourth timestamp, $T_4$, is captured as a function of the local time in the primary controller, which either serves as or has been synchronized to the master time. As a result, there will be an offset between the local times in the two devices. The offset may be determined as shown below in equation 1.

$$offset = \big((T_2 - T_1) - (T_4 - T_3)\big)/2 \qquad (1)$$

In equation 1, the transmission delay is determined from the primary controller to the control circuit 210 for the first synchronize request message and from the control circuit 210 to the primary controller for the second synchronize request message. Subtracting the two values of the transmission delay where the transmission delays are determined using clock values from different local clocks has the effect of cancelling out the transmission delay and leaving a remainder of twice the offset between the two clocks. As a result, dividing the difference of the transmission delay values by two provides the offset value between the local clock values of the two devices. The control circuit 210 will now have an offset value to correlate the local time in its clock circuit 222 with respect to the time in the master clock. Adding the offset value to the local time will result in a clock signal that is synchronous to the value of the master clock. Thus, rather than using the local clock signal directly, the control circuit 210 adds the offset value to the local clock signal when a timestamp from the clock circuit 222 is desired. The controllers may also be periodically resynchronized to ensure that the local time in each device remains synchronized. It is contemplated that resynchronization may occur, for example, at intervals ranging from one-half second to five seconds.

Having correlated the input signal 242, or a change in state of the input signal, with an additional signal, such as the position feedback signal 230 or a timestamp, the correlated data may then be transmitted to another controller remote from the motor 80. The output interface 216 may connect to the industrial network 150 and communicate with any device connected to the industrial network. In some applications, the control program 116 executing in the industrial controller 40 may require the correlated data. In other applications, the motor drive 50, 70 controlling operation of the motor 80 may require the correlated data. When the additional controller is the industrial controller 40, the industrial controller 40 may be connected to the substrate 200 via the industrial network 150 and a suitable network medium 155. When the additional controller is a motor drive configured to operate the motor 80, the motor drive may be either a cabinet mounted motor drive 50 or an integrated motor drive 70. For a cabinet mounted motor drive 50, the motor 80 may be connected via the industrial network 150 and a suitable network medium 155. For an integrated motor drive 70, internal conductors may pass between the integrated motor drive 70 and the substrate 200. The conductors may be network medium 155. Optionally, other communication buses may be established between the substrate 200 and the integrated motor drive 70.

The control circuit 210 may be configured to transmit the correlated data according to application requirements. The input signal 242, or the change in state of the input signal, and correlated data are stored in memory 218 when the change in state of the input signal is detected. This change in state may occur frequently or infrequently, ranging, for example, from millisecond intervals to tens of seconds or minutes between intervals. At a higher frequency, it may be undesirable to transmit a data packet at each instance of the input signal 242 changing state. The high frequency of occurrence would generate excessive traffic on the industrial network 150. The control circuit 210 may include multiple instances of the input signal 242 and the correlated data in a single data packet and transmit the data at a reduced frequency compared to the rate at which the input signal 242 changes state. At a low frequency occurrence, it may be desirable to communicate the occurrence and the correlated data to the motor drive 50, 70 or to the industrial controller 40 as soon as the event occurs. The control circuit 210 may be configured to insert the input signal 242 and correlated data into a data packet and transmit the data packet immediately subsequent to detecting the change in occurrence. According to yet another aspect of the invention, the control circuit 210 may be configured to transmit data at a periodic interval according to a communication schedule for the industrial control system. The data packet may include any number of samples of the input signal 242 and correlated data according to the number of changes in state of the input signal 242 that occurred since the prior data packet was communicated. The flexible transmission of the data from the control circuit 210 to another controllers permits rapid detection and correlation of input data while transmitting the detected and correlated data as needed or as scheduled to reduce bandwidth on the industrial network 150.

As previously discussed, the output interface 216 may be configured to communicate on the industrial network 150. It is contemplated that this communication may be bidirectional and the output interface 216 may serve as a network interface for the control circuit 210 both transmitting and receiving data packets from the industrial network 150. In some controlled machines or processes 10, an axis of motion or multiple axes of motion may combine to execute in a repeated sequence. The repeated sequence may not correspond to a repetitive sequence by any one axis or by a combination of axes, but rather the repeated sequence performs one cycle of the controlled machine or process. One cycle of a controlled process may include, for example, receiving packaging material, filling the packaging material with a product, sealing the packaging material, labelling the packaging material, and discharging a completed product. In other applications, a line shaft may be an output of a drive train which is driven by the motor. One rotation of the line shaft does not correspond to one rotation of the motor. However, one rotation of the line shaft performs a desired function, such as cutting, stamping, or the like. Each rotation of the line shaft corresponds to one cycle of the controlled process. Each cycle of the controlled process may generate a cycle complete signal, either via a sensor 12 in the controlled process detecting a final step, via an internal status flag in the control program 116 being set, or a combination thereof. It may be desirable to correlate the completion of each machine cycle with a position feedback signal or it may be desirable to correlate an input signal 242 with a time of occurrence during the machine cycle.

In one application, the end of a machine cycle is generated by a sensor 15 proximate the motor 80. The control circuit 210 may capture each occurrence of the change in state of the input signal 242 from the sensor 15 for the end of a machine cycle in a manner similar to that discussed above. The control circuit 210 may then be further configured to determine a total duration of the machine cycle as a function of the correlated data, such as a timestamp, which was stored with the change of state from the machine cycle input signal. A second input signal 242 may be monitored in a manner discussed above, and a timestamp or position feedback signal that is correlated to the second input signal may be used to determine what portion of the present machine cycle has either passed or still remains as a function of the data correlated to both the second input signal and the machine cycle signal. This portion of the machine cycle may be represented, for example, as a percentage of the present machine cycle that has elapsed, as an angular distance travelled by the line shaft, or by any suitable value indication what portion of the machine cycle has either been completed or that still remains. This portion of the machine cycle may be correlated with the second input signal 242.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

**Claims**

1.  A system for correlating an input signal with an operating state of a motor, the system comprising:
    a substrate mounted on the motor, wherein the substrate further comprises:

a first input connected to a sensor proximate to the motor, the first input operative to receive a first signal from the sensor;

a second input connected to a position sensor mounted on the motor, the second input operative to receive a position feedback signal from the position sensor;

a control circuit operative to:

detect a change in state of the first signal,

correlate at least one additional signal to the change in state of the first signal, and

generate a data packet including the first signal and the at least one additional signal correlated at the change in state; and

a communication interface operative to transmit the data packet from the control circuit to at least one additional controller external from the motor.

2. The system of claim 1, wherein:

the position sensor continually generates the position feedback signal corresponding to a present angular position of the motor; and

the at least one additional signal correlated to the change in state of the first signal is the position feedback signal.

3. The system of claim 2, wherein the control circuit is further operative to:

generate an interrupt signal when the change in state of the first signal is detected, and

store a present value of the position feedback signal in memory on the control circuit when the interrupt signal is generated.

4. The system of claim 2, wherein the control circuit is further operative to:

sample a value of the position feedback signal at a periodic interval, and

store a most recent sampled value of the position feedback signal in memory on the control circuit when the change in state of the first signal is detected.

5. The system of claim 4, wherein:

the position feedback signal is provided to a motor drive at a second periodic interval to control operation of the motor, and

a duration of the periodic interval at which the value of the position feedback signal is sampled for correlation to the change in state of the first signal is less than the a duration of the second periodic interval.

6. The system of one of claims 1 to 5, at least one of:
wherein:

the substrate further comprises a clock circuit;

the clock circuit is synchronized to a master clock circuit; and

the at least one additional signal correlated to the change in state of the first signal is a timestamp from the clock circuit;

wherein:

the motor is connected to a drivetrain for an axis of motion of a controlled machine or process;

the controlled machine or process has a machine cycle, which executes on a periodic basis;

the periodic basis on which the machine cycle executes does not correspond to one rotation of the motor; and

the at least one additional signal correlated to the change in state of the first signal is a portion of the machine cycle;

wherein the at least one additional controller is a motor drive operatively connected to the motor to control operation of the motor; and

wherein the at least one additional controller is an industrial controller in communication with the communication interface via an industrial network.

7. A method for correlating an input signal with an operating state of a motor, the method comprising the steps of:

receiving a first signal at a first input from a sensor proximate to the motor, wherein the first input is on a substrate mounted on the motor;

receiving a position feedback signal at a second input on the substrate from a position sensor mounted on the motor;

detecting a change in state of the first signal;

correlating at least one additional signal to the change in state of the first signal;

generating a data packet including the first signal and the at least one additional signal correlated at the change in state; and

transmitting the data packet from a control circuit on the substrate to at least one additional controller external from the motor.

8. The method of claim 7, wherein:

the position sensor continually generates the position feedback signal corresponding to a present angular position of the motor; and

the at least one additional signal correlated to the change in state of the first signal is the position feedback signal.

9. The method of claim 8, further comprising the steps of:

generating an interrupt signal when the change in state of the first signal is detected, and

storing a present value of the position feedback signal in memory on the control circuit when the interrupt signal is generated.

10. The method of claim 8 or 9, further comprising the steps of:

sampling a value of the position feedback signal at a periodic interval, and

storing a most recent sampled value of the position feedback signal in memory on the control circuit when the change in state of the first signal is detected.

11. The method of claim 10, further comprising the step of transmitting the position feedback signal to a motor drive at a second periodic interval to control operation of the motor, wherein a rate of the periodic interval at which the value of the position feedback signal is sampled for correlation to the change in state of the first signal is greater than a rate of the second periodic interval.

12. The method of one of claims 7 to 11, at least one of:

further comprising the step of synchronizing a clock circuit on the substrate to a master clock circuit, wherein the at least one additional signal correlated to the change in state of the first signal is a timestamp from the clock circuit; and

further comprising the step of receiving a third signal at the substrate at a periodic interval, wherein:

the third signal corresponds to a machine cycle;

the periodic interval at which the third signal is received does not correspond to one rotation of the motor; and

the at least one additional signal correlated to the change in state of the first signal is a portion of the machine cycle.

13. The method of one of claims 7 to 12, at least one of:

wherein the at least one additional controller is a motor drive operatively connected to the motor to control operation of the motor; and

wherein the at least one additional controller is an industrial controller in communication with the communication interface via an industrial network.

14. A system for correlating an input signal at a motor, the system comprising:

an encoder mounted on the motor, wherein the encoder is operative to generate a position feedback signal corresponding to an angular position of the motor;

a substrate mounted in either the encoder or on the motor;

an input on the substrate, wherein the input is operative to receive an external signal from a sensor proximate the motor; and

a control circuit on the substrate, the control circuit operative to:

detect a change in state of the external signal,

generate a data packet including an indication of the change of state of the external signal and at least one additional signal correlated at the change in state; and

a communication interface operative to transmit the data packet from the control circuit to at least one additional controller external from the motor.

15. The system of claim 14, wherein the at least one additional signal is either the position feedback signal or a timestamp generated by a clock circuit present in the control circuit.

FIG. 1

FIG. 2

FIG. 3

FIG. 4

FIG. 5

FIG. 6

Europäisches
Patentamt
European
Patent Office
Office européen
des brevets

# EUROPEAN SEARCH REPORT

Application Number

EP 25 17 5486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 375 459 A1 (ICOS PHARMA S P A [IT]) 19 September 2018 (2018-09-19) | 1-3,5,7, 9,11,14 | INV. H02P6/16 |
| Y | * paragraph [0124] - paragraph [0148]; | 4,10,15 | G01P3/487 |
| A | claims 5-7; figures 3-4 * | 6,12,13 | H02K11/21 |
| | ----- | | |
| Y | CHANG YEN-CHI ET AL: "Real-Time Sub-Count Estimation With State Continuity for Asynchronous and Quantized Sensing", IEEE/ASME TRANSACTIONS ON MECHATRONICS, IEEE SERVICE CENTER, PISCATAWAY, NJ, US, vol. 21, no. 3, 1 June 2016 (2016-06-01), pages 1457-1466, XP011611206, ISSN: 1083-4435, DOI: 10.1109/TMECH.2015.2506647 [retrieved on 2016-05-02] | 4,10 | |
| A | * the whole document * | 1-3,5-9, 11-15 | |
| | ----- | | |
| Y | US 2020/373861 A1 (MANDOUX FELIX [FR] ET AL) 26 November 2020 (2020-11-26) | 15 | |
| A | * paragraph [0024] - paragraph [0026]; figure 3 * | 1-14 | TECHNICAL FIELDS SEARCHED (IPC) |
| | ----- | | H02P H02K G01P G01D |

The present search report has been drawn up for all claims

| Place of search | Date of completion of the search | Examiner |
|---|---|---|
| Munich | 9 September 2025 | Kruip, Stephan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 5486

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2025

| Patent document cited in search report | | Publication date | Patent family member(s) | | Publication date |
|---|---|---|---|---|---|
| EP 3375459 | A1 | 19-09-2018 | DK | 3064226 T3 | 06-06-2018 |
| | | | EP | 3064226 A1 | 07-09-2016 |
| | | | EP | 3375459 A1 | 19-09-2018 |
| | | | ES | 2670402 T3 | 30-05-2018 |
| | | | ES | 2770376 T3 | 01-07-2020 |
| US 2020373861 | A1 | 26-11-2020 | EP | 3679645 A1 | 15-07-2020 |
| | | | GB | 2566292 A | 13-03-2019 |
| | | | US | 2020373861 A1 | 26-11-2020 |
| | | | WO | 2019048349 A1 | 14-03-2019 |

EPO FORM P0459

For more details about this annex : see Official Journal of the European Patent Office, No. 12/82